# EUROPEAN PATENT APPLICATION

(11) **EP 2 689 875 A1**
(43) Date of publication of application: **29.01.2014**
(21) Application number: 12178337.7
(22) Date of filing: 27.07.2012
(51) Int. Cl.: B23B 31/107, A61C 9/00, A61C 11/08, F16M 11/04

(54) **Coupling device**

(71) Applicant: Zfx GmbH, 85221 Dachau (DE)
(72) Inventor: Geier, Andreas, 39010 Tisens (IT); Jaider, Elias, 39054 Ritten/Unterinn (IT)
(74) Representative: Manitz, Finsterwald & Partner GbR

(57) **Abstract**

The present disclosure relates to a coupling device comprising a base element (14), in particular adapted to be connected to an apparatus, a receiving element (12) adapted to receive an object, and a coupling unit comprising first support means (30') and first fixation means (38a,38b) disposed on the base element and second support means (30) and second fixation means (48a,48b) disposed on the receiving element. The first and second support means define a plurality of, in particular three, discrete support segments of the base element and the receiving element in a coupled state. The first and second fixation means are adapted to cooperate to releasably fix the receiving element to the base element.

## Description

The present application relates to a coupling device.

Coupling devices are used e.g. for fixing an object in a well-defined orientation to an apparatus, such as a machine, e.g. a turning or milling machine. A further exemplary application of such coupling devices are e.g. a scanning units that are used to create a digital model of an object for visualization and/or analyzes purposes.

Especially in the exemplary applications mentioned above, it is essential to position the object precisely in a specific position relative to the apparatus. Accurate positioning is vital to obtain precisely machined objects and/or precisely determined virtual models of the scanned object.

Hence, a coupling device should facilitate an easy yet highly accurate and precisely reproducible mounting of the object to the apparatus.

The coupling device according to the present disclosure comprises a base element that is in particular adapted to be connected to an apparatus. Particularly, the base element is connected to a positioning unit of the apparatus which allows translating and/or rotating the object as needed for e.g. machining or scanning processes.

Further, the device comprises a receiving element adapted to receive the object. Since the base element and the receiving element are separate components, it is possible to fix the object to the receiving element outside the apparatus which is in most cases more convenient. Further, a certain receiving element having specific properties adapted to the object to be machined or scanned may be chosen from a plethora of different receiving elements that are all compatible with the base element. It is also possible to provide e.g. a scanner and a machine tool with similar base elements so that the receiving element can be precisely and reproducibly mounted to both of them in a spatially well-defined orientation. Scanning data obtained in a coupled state of the base element and the receiving element can in this case be transferred easily to the machine tool since the receiving element can be accurately mounted to the machine tool in a known geometrical relation to the position of the receiving element during scanning. Analogously, two or more machine tools can be provided with similar base elements in order to simplify the transfer of the object to be machined between the machines during a multistep machining process.

Means for fixing the object to the receiving element may comprise screws, clamps or other suitable components.

The coupling device further comprises a coupling unit comprising first support means and first fixation means disposed on the base element and second support means and second fixation means disposed on the receiving element. The first and second support means define a plurality of discrete support segments of the base element and the receiving element in a coupled state of the coupling device. In particular, three support segments are provided to define an unambiguous contact plane. The term "plane" should in this context not be misunderstood in the sense that the base element and the receiving element are in extensive contact with each other. In contrast, the contact between the base element and the receiving element is in essence defined by said support segments.

The first and the second fixation means are adapted to cooperate to releasably fix the receiving element to the base element.

In other words, the first and second support means define the geometrical constraints of the contact between the base element and the receiving element, whereas the fixation means provide a reliable yet releasable connection between the base element and the receiving element. Further, the coupling between said elements is accurate and precisely reproducible, i.e. a repeated coupling between said elements leads to the same relative spatial orientation of said elements in the coupled state.

The fixation means may be designed such, that an unintentional decoupling of the base element and the receiving element is prevented.

The reliable coupling of the base element and the receiving element is particularly important in cases where the object - and thus the coupling device - is moved during the operation of the apparatus.

In an embodiment of the coupling device according to the present disclosure, the support segments are disposed around a central axis of the coupling device. In particular, the support segments are regularly and/or symmetrically disposed around said central axis. The support segments may be disposed on an imaginary circle disposed coaxially to the central axis.

In a further embodiment of the coupling device according to the present disclosure, each support segment comprises two punctiform contact areas. Exemplarily, if three discrete support segments are provided, the support means provide six very localized contact areas with point-like characteristics.

In another embodiment of the coupling device according to the present disclosure, normals on these contact areas may be inclined relative to a connection direction of the coupling device. A normal on a contact area is a vector perpendicular to the respective contact area. According to the present disclosure, at least some contact areas are oriented such that their respective normals are not parallel to a connection direction or central axis of the coupling device. Providing inclined contact areas, especially when at least some of the contact areas are also inclined relative to other contact areas, facilitates an easy and unambiguous coupling of the base element and the receiving element making sure that they assume well defined positions in relation to each other in a coupled state.

In an embodiment of the coupling device according to the present disclosure, each of the support segments comprises a pair of support elements disposed on one of the base element and the receiving element contacting in a coupled state of the coupling device a single support element disposed on the other one of the receiving element and the base element. In particular, the pair of support elements comprises two support elements spatially separated from each other, wherein the distance between the support elements of the pair of support elements is smaller than the size of the single support element. In other words, the distance between the support elements of the pair of support elements is such, that the single support element cannot be placed between them without touching both. Thus, the support elements provide in essence the sole support of the receiving element on the base element.

In yet another embodiment of the coupling device according to the present disclosure, the first and second support means comprise support elements that are three-dimensional protrusions, e.g. support elements of at least partially spherical or ellipsoidal shape. In particular, the support elements are spheres fixed to the base element or to the receiving element. E.g. if the support elements are spheres, the distance between the spheres may be smaller than their diameter.

The support elements may be made of hardened metal to improve their resistance against wear and thereby making sure that the precision of the coupling device does not deteriorate over time. In turn, since the facing surfaces of the receiving element and of the base element are not in direct contact with each other, the requirements as regards their precision and wear resistance are relative low.

In an embodiment of the coupling device according to the present disclosure, in a coupled state of the coupling device the first support means are provided at a first distance from a central axis of the coupling device and the second support means are provided at a second distance from the central axis, wherein the first and second distances are different. Exemplarily, the first and second support means lay on an imaginary first and second circles, respectively, having different radii. The measure to provide the first and second support means at different distances from the central axis contributes to the effect that the base element and the receiving element are brought in essence automatically in the correct position with respect to each other. In other words, the geometrical arrangement defined above may be designed such that said elements are urged in the correct position in the process of bringing them together. In particular, the difference between the first and second distances is smaller than the size of the support elements. E.g. if the support elements are spheres, the difference between the first distance and the second distance is smaller than their diameter. It should be understood that embodiments of the coupling device are conceivable that comprise support segments disposed at different distances from the central axis. In these embodiments, some of the first support means or parts of it may be provided at a first distance from a central axis of the coupling device and the associated second support means or parts of it may be provided at a second distance from the central axis, wherein the first and second distances are different.

In an embodiment of the coupling device according to the present disclosure, the first or second fixation means comprise an undercut and the second or first fixation means comprise at least one movable fixation element, in particular at least one pivotable arm, adapted to cooperate with the undercut.

In a further embodiment of the coupling device according to the present disclosure, the first and second fixation means comprise clamping or tensioning means that are adapted to exert a force that fixes the receiving element to the base element. Said clamping or tensioning means may be provided to avoid play between the base element and the receiving element. Exemplarily, the cooperating first and second fixation means may comprise complimentarily inclined surfaces that transform a relative movement of said means into in a force pulling the base element and the receiving element together.

In yet another embodiment of the coupling device according to the present disclosure, the first or second fixation means are disposed closer to a central axis of the coupling device than the first and second support means. In an embodiment of the coupling device according to the present disclosure, the first and second fixation means are disposed on a protrusion projecting from the base element or the receiving element and extending in a coupled state of the coupling device in an opening of the receiving element or the base element, respectively, thereby contributing to a compact design of the coupling device.

More areas of applicability of the present disclosure will become apparent from the detailed description provided hereinafter. It should be understood that the detailed description and specific examples are intended for the purpose of illustration only and are not intended to limit the scope of the invention in any way. The Figures are simplified and schematic. Details not necessary for the understanding of the invention are omitted.

The present disclosure will be explained in more detail and becomes fully understood from the detailed description and the accompanying drawings.
- Fig. 1: shows a perspective view of the coupling device according to the present disclosure in a perspective view,
- Figs. 2 and 3: show the receiving element and the base element in an exploded view, respectively,
- Figs. 4 and 5: show cross-sectional views of the coupling device according to the present disclosure in a coupled state, and
- Figs. 6 and 7: show the geometrical arrangement of the support elements.

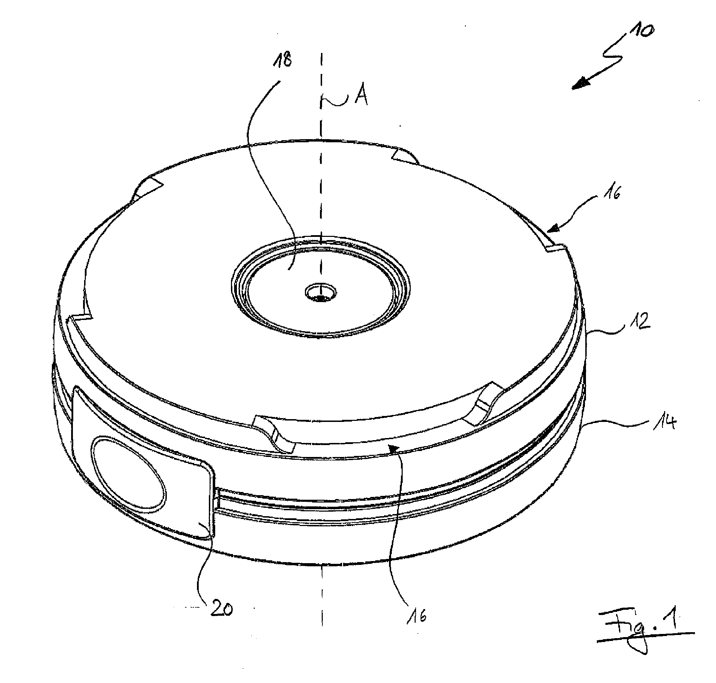

Fig. 1 shows a coupling device 10 comprising a tray-like receiving element 12 and a base element 14. Receiving element 12 is configured to receive an object e.g. an articulated model of a yaw of a patient or a prosthetic dental object. For this purpose, receiving element 12 is provided with cutouts 16 that match corresponding protrusions on an adapter which carries the model in a known anatomical position. Such adapters are available in different designs and are commonly referred to as "splits". To prevent that the adapter decouples from receiving element 12, both the adapter and the receiving element 12 are provided with a magnet to create a magnetic coupling between said components. Magnet 18 of receiving element 12 is disposed coaxially to a central axis A of coupling device 10. In the shown exemplary embodiment of the coupling device according to the present disclosure, central axis A is parallel to the connection direction of coupling device 10, i.e. parallel to the relative movement of elements 12, 14 during the coupling process.

Base element 14 is - releasably or fixedly - coupled to a positioning unit of a dental scanner (not shown). Said positioning unit allows to translate and/and rotate the model in order to be able to scan said model from different perspectives.

In a dental laboratory, models that have to be scanned are often mounted to different kinds of adapters. Therefore, the receiving element 12 has to be chosen in accordance with the adapter of the model to be scanned. The functionality of coupling device 10 is such that changing receiving element 12 can be carried out swiftly without compromising the precision of the orientation of receiving plate 12 relative to base element 14 in a coupled state which is vital for the determination of exact model data. To decouple elements 12, 14, release button 20 is pressed. Decoupled receiving element 12 can then be replaced by another receiving element carrying the next object to be scanned. Decoupled receiving element 12 can also be coupled to a machine for machining the object provided with a base element similar to base element 14. Hence, receiving element 12 can be mounted precisely to the scanner and to the machine in a well-defined geometrical and spatial relationship facilitating the transfer of digital data - in particular via a computer for model optimization purposes - between the scanner and the machine.

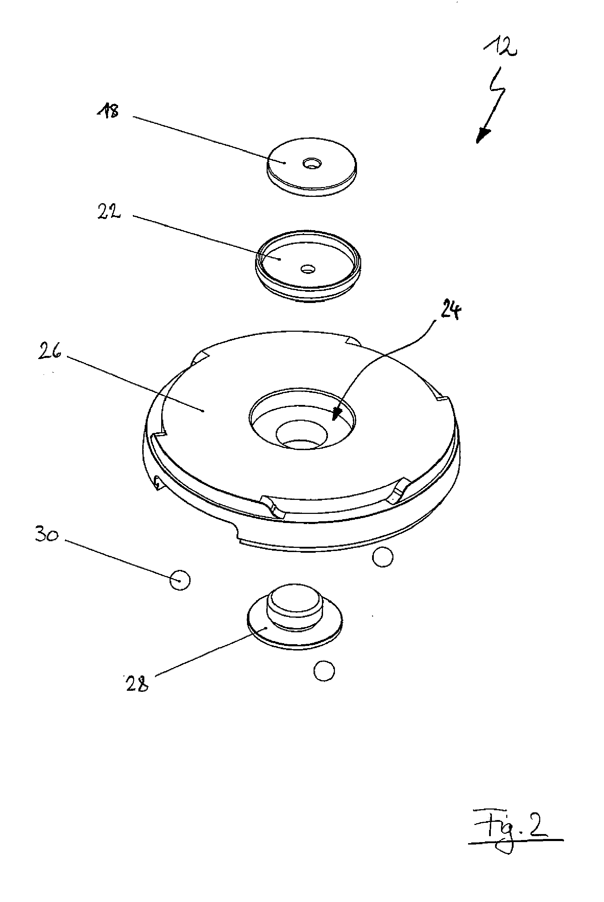

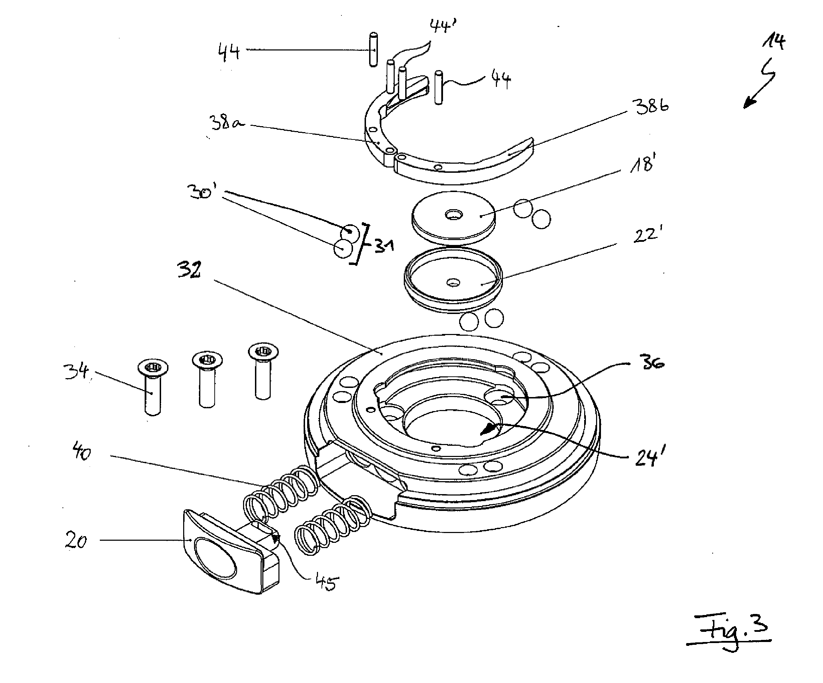

The components of elements 12, 14 are described in detail in the following with reference to Figs. 2 and 3.

Fig. 2 shows the components of receiving element 12 in an exploded view.

Magnet 18 is disposed in a pan-like magnet carrier 22 which is in turn disposed in a central cavity 24 of a receiving plate 26. A screw 28 is attached to the underside of receiving plate 26 (not visible in Fig. 2) which faces base element 14 in a coupled state of coupling device 10. Further, support spheres 30 are fixed to the underside of receiving plate 26.

Fig. 3 shows the components of base element 14 in an exploded view.

Base element 14 comprises a base plate 32 which can be fixed to the positioning unit of the scanner by bolts 34 inserted in corresponding holes 36. As receiving element 12, base element 14 comprises a magnet 18' disposed in a magnet carrier 22' that is in turn disposed in a central cavity 24' of base element 14. Magnet 18' cooperates magnetically with screw 28 - screw 28 may be made of paramagnetic and/or permanently magnetic material - in order to create a force assisting the coupling between elements 12, 14 already in an early phase of the coupling process.

To fix receiving element 12 releasably to base element 14, fixation arms 38a, 38b are provided. Fixation arms 38a, 38b are pivotally mounted to base element 14 by pegs 44. Further, fixation arms 38a, 38b are coupled to release button 20 via pegs 44' engaging a slit 45 disposed on release button 20. Pressing release button 22 compresses springs 40 and provokes a pivotal movement of arms 38a, 38b. How arms 38a, 38b cooperate with receiving element 12 is described in detail further below.

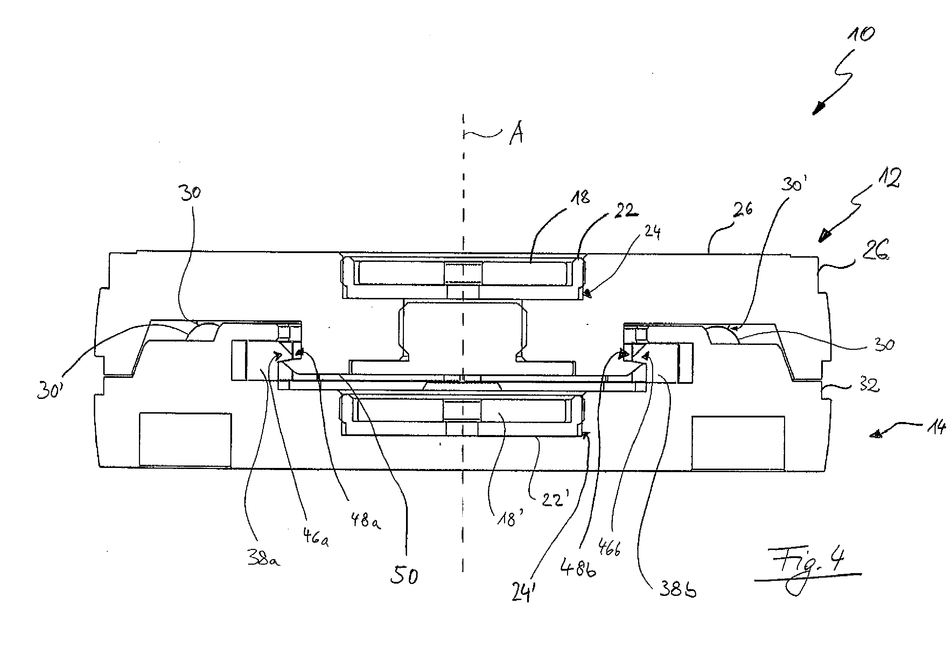

As receiving element 12, base element 14 is provided with support spheres 30' fixedly disposed in corresponding stud holes and arranged in pairs 31. The way how spheres 30 and spheres 30' cooperate will be described with reference to Fig. 4.

Fig. 4 shows a cross-section of coupling device 10 in a plane perpendicular to the activation direction of release button 20 - which is therefore not visible - containing central axis A. This view demonstrates that base plate 32 of base element 14 and the underside of receiving plate 26 are not in direct contact with each other. The contact between said components is in essence established through support spheres 30, 30'. Hence, spheres 30, 30' define the relative positioning of elements 12, 14 and carry the load acting between them. In other words, receiving element 12 is supported on base element 14 by support segments formed by spheres 30, 30'.

Since spheres 30, 30' play a crucial role for the precision of coupling device 10 and since they are subject to substantial load, preferably spheres manufactured from hardened metal are used. In particular, spheres that are usually used in ball bearings are well suited. Such spheres are highly resistant to wear so that an accurate and repeatable coupling of elements 12, 14 can be provided.

Although support spheres 30, 30' define the geometrical constraints of the coupling between elements 12, 14, elements 12, 14 are also in contact with each other via fixation arms 38a, 38b to avoid that elements 12, 14 can be decoupled unintentionally. To this end, fixation arms 38a, 38b are provided with protrusions 46a, 46b, respectively, cooperating with corresponding undercuts 48a, 48b provided on a central protrusion 50 extending from the underside of receiving plate 26. Protrusion 50 extends in a corresponding opening of base plate 32, so that the contact planes between protrusion 46a, 46b and undercuts 48a, 48b are positioned below spheres 30, 30' yielding a compact construction of coupling device 10.

To create a force urging elements 12, 14 together, the contact planes between protrusions 46a, 46b and undercuts 48a, 48b are not oriented perpendicular to central axis A but are slightly tilted. Therefore, a movement of arms 38a, 38b towards protrusion 50 urges protrusion 50 deeper into the corresponding opening of base plate 32.

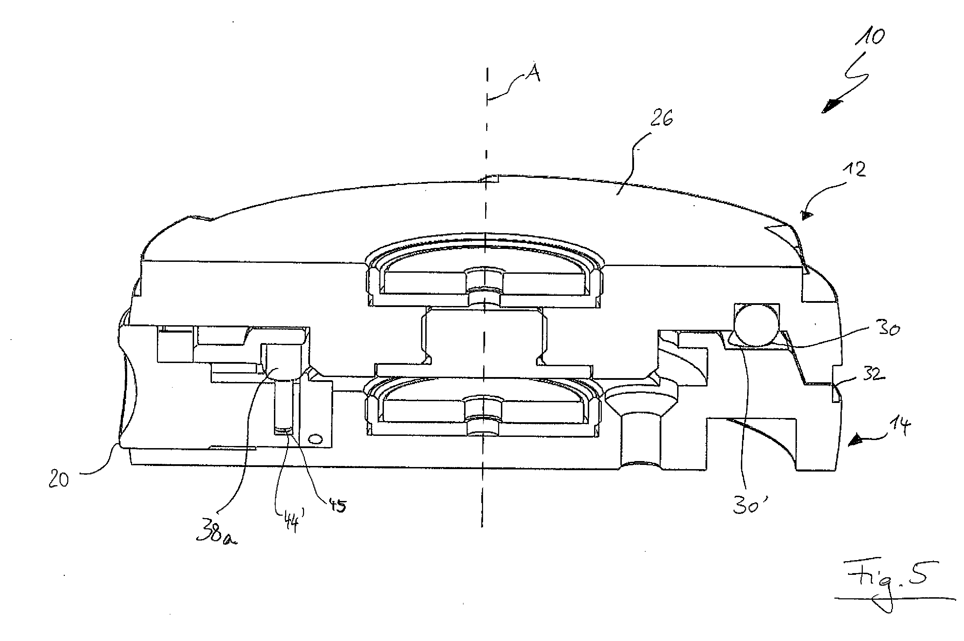

Fig. 5 shows a perspective view of a cross-section of coupling device 10. Said cross-section is rotated approximately 90° relative to the cross-section shown in Fig. 4. It shows that one of pegs 44' couples arm 38a to release button 20 via slit 45. Pressing release button 20 in direction towards central axis A leads to a compression of springs 40 and pivots fixation arm 38a around a pivot axis provided by one of pegs 44 (not visible) thereby disengaging protrusion 46a from undercut 48a. Fixation arm 38b is activated analogously. When releasing release button 20, compressed springs 40 move button 20 away from central axis A and arms 38a, 38b pivotable inwardly.

It can be seen from Fig. 5 that elements 12, 14 touch each other only via spheres 30, 30' and undercuts 48a, 48b interacting with protrusion 46a, 46b, respectively. However, the components mentioned before serve distinctly different functions, namely to provide a well-defined geometry of the contact between elements 12, 14 on the one hand and a fixation of elements 12, 14 on the other hand.

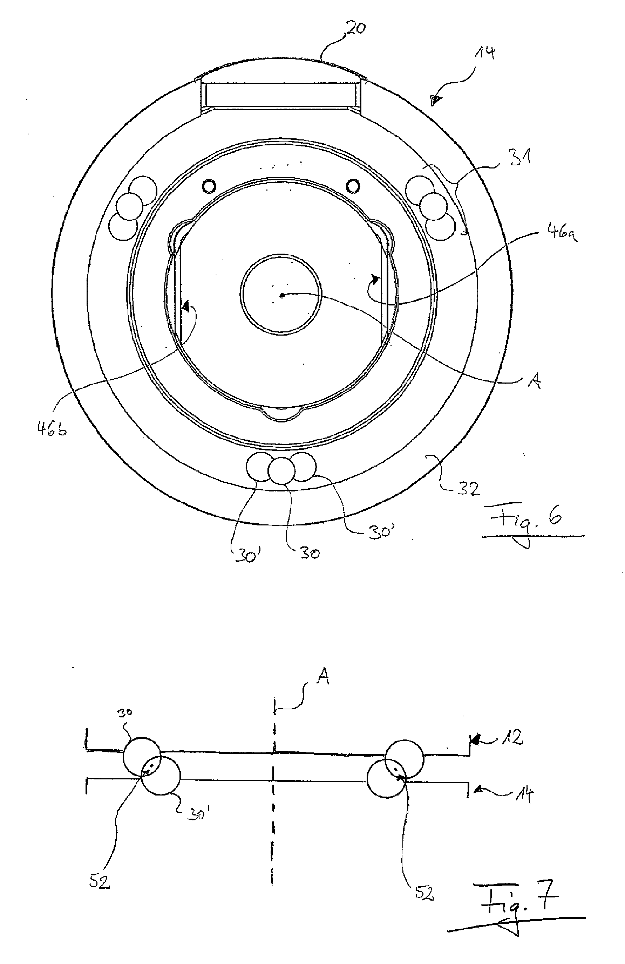

Figs. 6 and 7 show in detail the arrangement of support spheres 30, 30' that provide a reliable and precise relative orientation of elements 12, 14.

Fig. 6 shows base element 14 and support spheres 30 of receiving element 12 in their position in a coupled state of coupling device 10. It can be seen that spheres 30, 30' have the same size. However, spheres 30 are positioned slightly farther away from central axis A than spheres 30'. It can also be seen that spheres 30' of each pair 31 are separated from each other. The distance between spheres 30' is smaller than the diameter of spheres 30, 30'. When placing receiving elements 12 on base element 14, spheres 30 will therefore not touch base plate 32 but will contact each of support spheres 30' in a single localized, punctual or punctiform contact area. Since spheres 30 are located slightly farther away from central axis A than support spheres 30' and since in total three uniformly distributed support segments - comprising each a pair 31 of support spheres 30' and a single support sphere 30 - are provided, a translation of receiving element 12 relative to base element 14 in a plane perpendicular to axis A is reliably prevented. Hence, the centering of receiving element 12 is accurately reproducible. A relative rotation of elements 12, 14 is suppressed by the fact that spheres 30 of element 12 are disposed between spheres 30' of the corresponding pair 31 of spheres 30' thereby providing a reproducible angular positioning of receiving element 12 relative to base element 14. The correct allocation of support spheres 30 to the designated pair 31 of spheres 30 is provided by the contour of release button 20 and a complementary cut-out on the rim of receiving element 12 (cf. Figs. 1 and 2). Further, the spatial arrangement of spheres 30, 30' defines a minimum distance of base plate 32 and receiving plate 26.

Fig. 7 shows the principle how spheres 30, 30' cooperate (not to scale of the arrangement of spheres 30, 30' shown in Fig. 6). Neither spheres 30 nor spheres 30' touch element 14 or element 12, respectively. Spheres 30, 30' overlap to indicate that spheres 30 are disposed partly between spheres 30' of each pair 31. Therefore, each sphere contacts two spheres 30'. Each of the contact between spheres 30, 30' is very localized and punctiform forming a tiny contact area 52. Contact areas 52 are inclined relative to central axis A. In other words, a line connecting the respective centers of contacting support spheres 30, 30' is not parallel to central axis A. Said line represents in essence a normal on the corresponding contact area 52.

Further, the greater radial distance of spheres 30' compared to the radial distance of spheres 31' is associated with the effect that even a slight force urging elements 12, 14 together in a direction parallel to axis A creates forces urging spheres 30 between the corresponding pair 31 of spheres 30' and in an outward direction. Since the support segments are distributed around axis A, the sum of the slight outwardly urging forces acting on spheres 30 unambiguously and very precisely positions receiving element 12 relative to base element 14 in the course of the coupling process.

In other words, six punctiform contact areas 52 provided by three pairs 31 of spheres 30' cooperating each with a single sphere 30 geometrically constrain - in a coupled state - the system of coupling device 10 unambiguously and precisely. The design of protrusions 46a, 46b of fixation arms 38a, 38b and of undercuts 48a, 48b of central protrusion 50 of receiving element 12 provides the force that pushes elements 12, 14 together urging spheres 30, 30' in the correct relative positions while at the same time fixing elements 12, 14 releasably.

It should be understood that more than three support segments - each comprising in the embodiment described above a single sphere 30 and one pair 31 of spheres 30' - and/or an irregular distribution of said support segments can also provide suitable geometrical constraints for coupling elements 12, 14. Especially in cases in which strong forces act between elements 12, 14 - e.g. when the object carried by receiving element 12 is rather heavy - providing more than three support segments might be advantageous. However, providing more than three support segments may reduce the precision of the coupling device.

Further, providing a coupling force between elements 12, 14 and fixing them releasably together might be achieved by an alternative mechanism than that described above comprising fixing arms 38a, 38b cooperating with central protrusion 50. Instead of providing pretensioned release button 20, a screw which translates a rotation into a translation and which is directly or indirectly coupled to arms 38a, 38b can be provided to activate arms 38a, 38b.

While the exemplary embodiment of the coupling device according to the present disclosure has been described in connection with a unit for scanning dental objects, it should be understood that the coupling device according to the present disclosure can be used in many different fields in which a reliable, precise and repeatable coupling of components is important.

The description is merely of exemplary nature and, thus, variations that do not depart from the gist of the disclosed teachings are intended to be within the scope of the disclosure.

### Reference numeral list

- 10: coupling device
- 12: receiving element
- 14: base element
- 16: cut-out
- 18, 18': magnet
- 20: release button
- 22, 22': magnet carrier
- 24, 24': cavity
- 26: receiving plate
- 28: screw
- 30, 30': support sphere
- 31: pair of support spheres
- 32: base plate
- 34: bolt
- 36: hole
- 38a, 38b: fixation arm
- 40: spring
- 44, 44': peg
- 45: slit
- 46a, 46b: protrusion
- 48a, 48b: undercut
- 50: central protrusion
- 52: contact area
- A: central axis

## Claims

1. Coupling device, comprising:
- a base element (14), in particular adapted to be connected to an apparatus,
- a receiving element (12) adapted to receive an object,
- a coupling unit comprising first support means (30') and first fixation means (38a, 38b) disposed on the base element (14) and second support means (30) and second fixation (48a, 48b) means disposed on the receiving element (12),
wherein the first and second support means (30', 30) define a plurality of, in particular three, discrete support segments of the base element (14) and the receiving element (12) in a coupled state of the coupling device, and
wherein the first and second fixation means (38a, 38b, 48a, 48b) are adapted to cooperate to releasably fix the receiving element (12) to the base element (14).

2. Coupling device according to claim 1, wherein the support segments are disposed around a central axis (A) of the coupling device.

3. Coupling device according to claim 1 or 2, wherein each support segment comprises two punctiform contact areas (52).

4. Coupling device according to claim 3, wherein the respective normal on each the contact areas (52) is inclined relative to a connection direction of the coupling device.

5. Coupling device according to any of the preceding claims, wherein each of the support segments comprises a pair (31) of contact elements (30') disposed on one of the base element (14) and the receiving element (12) contacting in a coupled state of the coupling device a single support element (30) disposed on the other one of the receiving element (12) and the base element (14).

6. Coupling device according to claim 5, wherein the pair (31) of support elements (30') comprises two support elements (30') spatially separated from each other, wherein the distance between the support elements (30') of the pair (31) of support elements (30') is smaller than the size of the single support element (30).

7. Coupling device according to any of the preceding claims, wherein the first and second support means comprise support elements (30, 30') of at least partially spherical or ellipsoidal shape.

8. Coupling device according to any of the preceding claims, wherein the support elements are spheres (30', 30) fixed to the base element (14) or to the receiving element (12).

9. Coupling device according to any of the preceding claims, wherein the support elements (30', 30) are made of hardened metal.

10. Coupling device according to any of the preceding claims, wherein in a coupled state of the coupling device the first support means (30') are provided at a first distance from a central axis (A) of the coupling device, wherein the second support means (30) are provided at a second distance from the central axis (A), and wherein the first and second distances are different.

11. Coupling device according to claim 10, wherein the difference between the first distance and the second distance is smaller than the size of the support means (30, 30').

12. Coupling device according to any of the preceding claims, wherein the first or second fixation means comprise an undercut (48a, 48b) and wherein the second or first fixation means comprise at least one movable fixation element, in particular at least one pivotable arm (38a, 38b), adapted to cooperate with the undercut (48a, 48b).

13. Coupling device according to any of the preceding claims, wherein the first and second fixation means (38a, 398b, 48a, 48b) comprise clamping or tensioning means that are adapted to exert a force that fixes the receiving element (12) to the base element (14).

14. Coupling device according to any of the preceding claims, wherein the first or second fixation means (38a, 398b, 48a, 48b) are disposed closer to a central axis (A) of the coupling device than the first and second support means (30, 30').

15. Coupling device according to any of the preceding claims, wherein the first or second fixation means (38a, 398b, 48a, 48b) are disposed on a protrusion (50) projecting from one of the base element (14) and the receiving element (12) and extending in a coupled state of the coupling device in an opening of the other one of the receiving element (12) and the base element (14).
